**Europäisches Patentamt**

**European Patent Office**

**Office européen des brevets**

(11) Veröffentlichungsnummer: **0 132 224**
**A1**

## (12) EUROPÄISCHE PATENTANMELDUNG

(21) Anmeldenummer: **84810296.8**

(22) Anmeldetag: **18.06.84**

(51) Int. Cl.⁴: **B 01 J 10/00**
**B 01 J 19/24**
**//C02F11/08**

(30) Priorität: **24.06.83 CH 3461/83**

(43) Veröffentlichungstag der Anmeldung:
**23.01.85 Patentblatt 85/4**

(84) Benannte Vertragsstaaten:
**BE CH DE FR GB IT LI NL**

(71) Anmelder: **CIBA-GEIGY AG
Postfach
CH-4002 Basel(CH)**

(72) Erfinder: **Büttiker, Rudolf, Dr.
Arnikastrasse 9
CH-4125 Riehen(CH)**

(72) Erfinder: **Beyrich, Jürgen, Dr.
Am Tischliweg 3
D-7859 Huttingen(DE)**

(72) Erfinder: **Seiler, Anton
Fin-d'Amont
CH-1893 Muraz(CH)**

(54) **Blasensäulen-Reaktor für Gas-Flüssig-Stoffaustauschreaktionen.**

(57) Eine zylinderische Blasensäule (1) mit einlass (3) und Auslass (4) für Gas- und Flüssigphase ist durch gelochte Zwischenböden (2) unterteilt. In den Zwischenböden (2) sind jeweils schnorchelartige separate Flüssigphasen-Durchlässe (21) angeordnet, welche einen gleichmässigeren Phasenstrom gewährleisten und die Ausbildung von grossen Blasen und Wirbelzöpfen an den Zwischenböden vermeiden.

Fig. 1

Croydon Printing Company Ltd

EP 0 132 224 A1

CIBA-GEIGY AG                          7-14478/=

Basel (Schweiz)


Blasensäulen-Reaktor für Gas-Flüssig-Stoffaustauschreaktionen
_____

Die Erfindung betrifft einen Blasensäulen-Reaktor für Gas-Flüssig-
Stoffaustauschreaktionen gemäss dem Oberbegriff des Patentanspruchs 1.


Zur Durchführung von Reaktionen, bei denen es auf einen intensiven
Stoffaustausch zwischen einer flüssigen Phase und einer Gasphase
ankommt - beispielsweise etwa bei der Nassoxidation -, werden vielfach sogenannte Blasensäulen verwendet. Es sind dies im allgemeinen
schlanke, hohe, durch gelochte Zwischenböden unterteilte Reaktionsgefässe, durch die die beiden Phasen unter Bildung eines Blasenbetts
hindurchgeführt werden.


Für einen intensiven Stoff- und Wärmeaustausch ist es von
Wichtigkeit, dass einerseits eine möglichst grosse Anzahl nicht
allzu grosser Blasen vorhanden ist und andererseits diese Blasen
stets neu gebildet werden, so dass ihre wirksame Oberfläche nicht
altert. Die aufsteigenden Blasen führen zu einer intensiven Durchmischung innerhalb des Reaktors. Um über den ganzen Reaktor ein
gutes Verweilzeitspektrum zu erzielen, sind mehrere Kammern bzw. eine
Aufteilung des Reaktors mittels Zwischenböden notwendig. Ein
besonderes Problem ergibt sich an den gelochten Zwischenböden, da
sich an diesen erfahrungsgemäss stets grosse Blasen und Wirbelzöpfe
bilden. Ausserdem gehen die beiden Phasen durch diese Zwischenböden
nicht gleichmässig sondern abwechslungsweise hindurch, so dass sich
eine unerwünschte Pulsation des Phasenstroms einstellt. Schliesslich
neigen gelochte Zwischenböden bisher gerne zum Verstopfen, wenn
sedimenthaltige Reaktionsgemische verarbeitet werden.

Durch die Erfindung soll nun ein Blasensäulen-Reaktor der eingangs definierten Art dahingehend verbessert werden, dass er eine bessere und gleichmässigere Ausbildung und Neubildung von Blasen gewährleistet und die Pulsation des Phasenstroms vermeidet. Ferner soll durch die Erfindung ein möglichst hoher Wirkungsgrad (chem. Umsatz pro Reaktorvolumen) und eine baulich möglichst kompakte und günstige Reaktorkonzeption erreicht werden.

Der erfindungsgemässe Blasensäulen-Reaktor ist in den Patentansprüchen beschrieben. Er ist ganz speziell geeignet für die Nassoxidation von schwer abbaubaren Stoffen, wo es auf guten Stoffaustausch und hohe Verweilzeiten ankommt.

In der DE-B 1 040 514 ist eine Reaktionskolonne mit mehreren auf rostartigen Zwischenböden angeordneten Füllkörperschüttungen beschrieben, wobei diese Füllkörperschüttungen durch schnorchelartige Ueberläufe mit Tauchleitungen miteinander in Verbindung stehen. Diese Kolonne ist für eine Reaktionsführung bestimmt, bei der die Gasphase gegen die Wirkung der Schwerkraft mit einer oberhalb der oberen Grenzgeschwindigkeit liegenden Geschwindigkeit der flüssigen Phase durch die Füllkörperschüttungen entgegengeführt wird. Ein Blasenbett kann sich dabei jedoch nicht ausbilden.

Weitere Druckschriften zum Stand der Technik sind DE-A-2 519 065, DE-C-709 665 und GB-A-1 475 452. Diese zeigen verschiedenste Arten von Reaktions-Kolonnen, jedoch durchwegs keine Blasensäulen gemäss der vorliegenden Erfindung.

Im folgenden wird die Erfindung anhand der Zeichnung näher erläutert. Es zeigen:

Fig. 1    ein stark vereinfachtes Prinzipschema eines ersten Ausführungsbeispiele eines erfindungsgemässen Reaktors,

Fig. 2    den Ausschnitt II aus Fig. 1 in grösserer Darstellung   und

Fig. 3    ein zweites Ausführungsbeispiel.

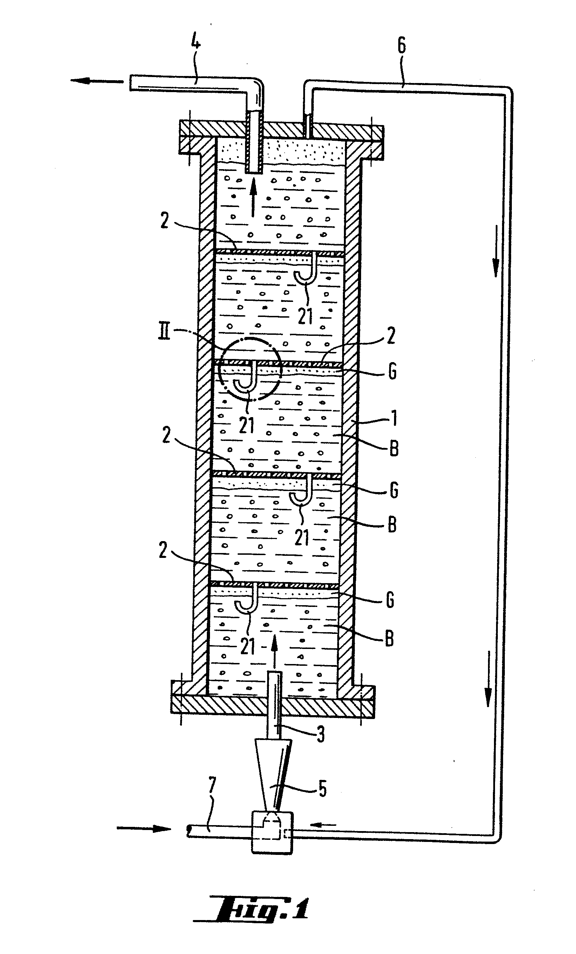

Der in Fig. 1 dargestellte Blasensäulen-Reaktor umfasst ein im wesentlichen zylindrisches Reaktionsgefäss 1 mit einer Anzahl gelochter Zwischenböden 2, einen Einlass 3 und einen Auslass 4 für das Gemisch aus Flüssig- und Gasphase, einen in einer Zufuhrleitung 7 für letzteres angeordneten Ejektor 5 und eine Rückführungsleitung 6 für Gasphase. In den gelochten Zwischenböden 2 sind je ein oder mehrere schnorchelartige Flüssigphasendurchlässe 21 angeordnet.

Die beiden zur Reaktion zu bringenden Phasen gelangen über die Leitung 7, den Ejektor 5 und den Einlass 3 in das Reaktionsgefäss 1, durchströmen dieses unter Bildung eines Blasenbetts von unten nach oben und verlassen es wieder durch den Auslass 4. Ein Teil der austretenden Gasphase wird dabei über die Rückführleitung 6 und den Ejektor 5 in den Reaktoreingang zurückgeführt. Falls zweckmässig,können die beiden Phasen auch getrennt zugeführt werden.

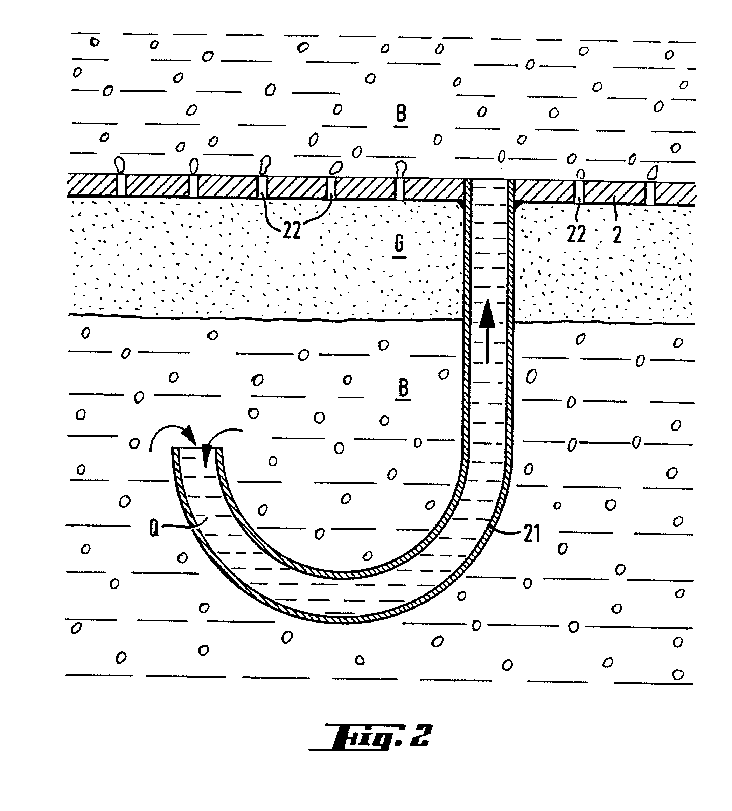

In Fig. 2 sind die Verhältnisse in der Nähe eines Zwischenbodens 2 detaillierter dargestellt. Unmittelbar unterhalb des Zwischenbodens 2 bildet sich ein Gaspolster G aus, während sich darunter und über dem Zwischenboden 2 das übliche Blasenbett B - also ein Gemisch von Flüssigphase und Gasphase in Blasenform - befindet.

Der Schnorchel 21 hat einen wesentlich grösseren lichten Querschnitt Q als die Löcher 22 des Zwischenbodens 2. Aufgrund seiner nach oben gekehrten Schnorchelform wirkt er als Gassperre, so dass nur Flüssigphase durch ihn hindurch in den Raum oberhalb des Zwischenbodens 2 gelangt. Die Gasphase tritt durch die Löcher 22 des Zwischenbodens 2 hindurch und bildet danach neue Blasen.

Aufgrund der erfindungsgemässen separaten Flüssigphasendurchlässe wird die bisher übliche Pulsation und damit verbunden die Bildung von grossen Blasen, Wirbelzöpfen etc. unterbunden. Ausserdem wird auf diese Weise auch die Durchführung von Sedimenten, Mikroorganismen, Fremdkörpern etc. erleichtert bzw. das Verstopfungsrisiko erheblich

- 4 -

reduziert. Letzteres spielt insbesondere bei der Nassoxidation von
vielfach schlammhaltigen Abwässern oder dgl. eine grosse Rolle.

Die separaten Flüssigphasendurchlässe in den gelochten Zwischenböden
können im Prinzip beliebig ausgebildet sein, wesentlich ist
lediglich, dass die Gasphase zurückgehalten wird. Die Ausbildung als
Schnorchel ist besonders einfach und zweckmässig.

Die partielle Rückführung von Gasphase ist nicht unbedingt notwendig,
jedoch vorteilhaft. Sie erhöht die Leerrohrgeschwindigkeit und
verbessert den Umsatz. Bei Gasphasenrückführung über den Ejektor
werden vorzugsweise die in der Regel gemeinsam vorliegenden beiden
Reaktions-Phasen getrennt und wegen des relativen geringen
Wirkungsgrads des Ejektors nur die Flüssigphase als Treibstrom für
den Ejektor verwendet.

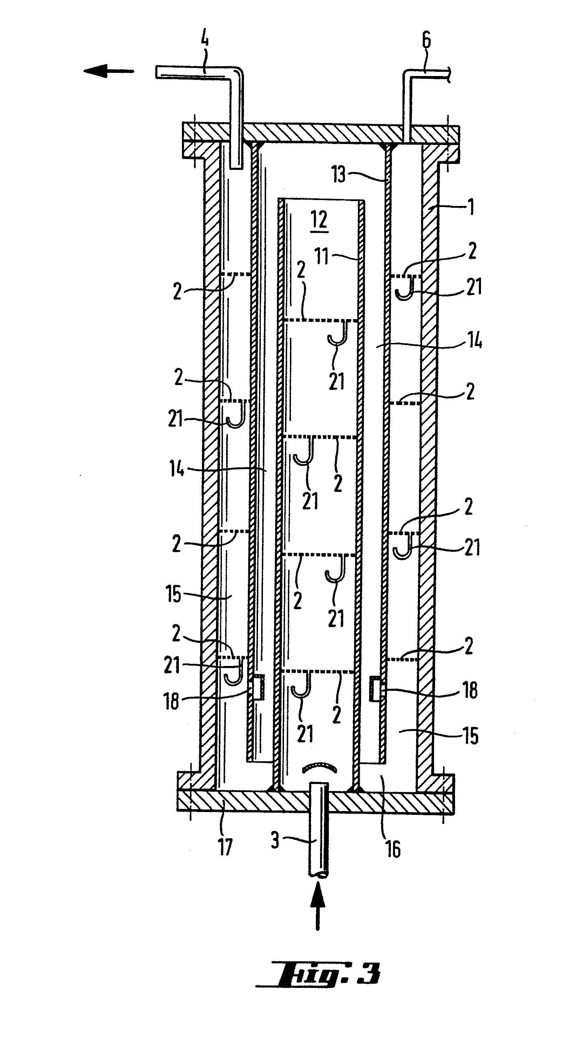

In Fig. 3 ist eine baulich besonders günstige Ausführungsform eines
erfindungsgemässen Blasensäulen-Reaktors dargestellt. Dieser besteht
hier aus zwei koaxial ineinander angeordneten zylindrischen Reaktionsgefässen 1 und 11, wobei ein zylindrisches Rohr 13 mit der Aussenwand
des inneren Reaktionsgefässes 11 einen relativ engen ringförmigen
Ueberströmkanal 14 bildet, der das oben offene Ende des inneren
Reaktionsgefässes 11 mit dem unten offenen Ende des äusseren, zwischen dem Rohr 13 und der Wand des äusseren Reaktionsgefässes 1 gebildeten Reaktionsraums 15 verbindet. Die beiden Reaktionsgefässe 1
und 11 bzw. von diesen umschlossenen Reaktionsräume 12 und 15 liegen
somit funktionell in Reihe.

Der Reaktor ist wie beim Ausführungsbeispiel nach Fig. 1 mit einem
Einlass 3 und einem Auslass 4 für Gas- und Flüssigphase versehen.
Ferner sind die Reaktionsräume 12 und 15 ebenfalls durch mehrere
gelochte, mit schnorchelartigen Flüssigphasen-Durchlässen 21
ausgestattete Zwischenböden 2 unterteilt.

Im Ueberströmkanal 14 strömt die Flüssigphase an den Rohrwänden entlang nach unten. Infolge der Beschleunigung durch die Schwerkraft ist nur ein kleiner Strömungsquerschnitt notwendig. Unten gelangt die Flüssigphase durch den Spalt 16 zwischen Rohr 13 und Reaktorboden 17 in den äusseren Reaktionsraum 15. Für die Gasphase sind eigene Durchlässe 18 in der Wand des Rohrs 13 vorgesehen. Damit wird ähnlich wie bei Fig. 1 eine Pulsation vermieden und ein gleichmässigeres Blasenbild erreicht.

Der in Fig. 3 gezeigte Blasensäulen-Reaktor ist baulich sehr kompakt und besitzt im Vergleich zu herkömmlichen Reaktoren gleicher Leistung weniger druckbelastete und entsprechend zu dimensionierende Fläche. Er gewährleistet einen guten internen Wärmeaustausch. Bei exothermen Reaktionen kann die Temperatur in der ersten Kammer somit schon deutlich über der Temperatur des eintretenden Phasenstroms liegen, wodurch das Anspringen der Reaktion begünstigt wird. Selbstverständlich können nicht nur zwei sondern auch mehrere Reaktionsgefässe ineinander angeordnet sein.

Patentansprüche

1. Blasensäulen-Reaktor für Gas-Flüssig-Stoffaustauschreaktionen in Form eines im wesentlichen langgestreckten, aufrechten Reaktionsgefässes (1) mit vorzugsweise mehreren gelochten Zwischenböden (2) und mit Ein- und Auslässen (3,4) für die Reaktionspartner, dadurch gekennzeichnet, dass die Zwischenböden (2) mit wenigstens einem als Gassperre ausgebildeten separaten Durchlass (21) für Flüssigphase ausgestattet sind.

2. Reaktor nach Anspruch 1, dadurch gekennzeichnet, dass der freie Strömungsquerschnitt (Q) des Durchlasses (21) grösser ist als derjenige der Gasdurchtrittslöcher (22) in den Zwischenböden (2).

3. Reaktor nach Anspruch 1 oder 2, dadurch gekennzeichnet, dass der Durchlass (21) im wesentlichen als den jeweiligen Zwischenboden (2) durchsetzender Schnorchel ausgebildet ist.

4. Reaktor nach Anspruch 3, dadurch gekennzeichnet, dass der Schnorchel (21) im wesentlichen ein in Form eines "J" gebogenes Rohr oder dgl. ist.

5. Reaktor nach einem der Ansprüche 1-4, gekennzeichnet durch einen über eine Leitung (6) mit einem Gasphasenauslass des Reaktors (1) verbundenen Ejektor (5) zur Zufuhr von vorzugsweise flüssiger Reaktionsphase und teilweisen Rückführung von Gasphase in den Reaktor.

6. Reaktor nach einem der Ansprüche 1 - 5, dadurch gekennzeichnet, dass zwei oder mehrere Reaktionsgefässe (1,11) ineinander angeordnet und durch im wesentlichen ringförmige Ueberströmkanäle (14) in Reihe verbunden sind.

7. Reaktor nach Anspruch 6, dadurch gekennzeichnet, dass die auf das innerste folgenden Reaktionsgefässe (1) an ihren unteren Enden mit getrennten Einlässen (16, 18) für Gas- und Flüssigphase versehen sind.

8. Reaktor nach Anspruch 7, dadurch gekennzeichnet, dass die getrennten Einlässe (16, 18) auf verschiedenen Niveaus liegen.

FO 7.7/KL/bg*/eh*

Fig.1

*Fig. 2*

*Fig. 3*

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-B-1 040 514 (FRIEDRICH UHDE) <br> * Spalte 1, Zeilen 1-6; Spalte 3, Zeilen 32-38; Spalte 4, Zeilen 22-44; Patentanspruch 6 * | 1,3,4 | B 01 J 10/00 <br> B 01 J 19/24 // <br> C 02 F 11/08 |
| A | DE-A-2 519 065 (M.W. LYKOW et al.) <br> * Seite 1, Zeilen 1,2; Seite 11, Zeile 13 - Seite 12, Zeile 23; Abbildungen 1,2 * | 1,5 | |
| A | DE-C- 709 665 (BRAUNKOHLE-BENZIN) <br> * Seite 1, Zeilen 1-15; Seite 2, Zeilen 38-68; Abbildung 1 * | 6 | |
| A | GB-A-1 475 452 (KUBOTA TEKKO) <br> * Seite 1, Zeilen 10-12,28-38; Seite 2, Zeilen 16-86; Abbildungen 1,2 * | 1 | RECHERCHIERTE SACHGEBIETE (Int. Cl. 3) |
| A | EP-A-0 046 313 (B.B.B. EERTINK) <br><br> * Auszug; Abbildung 3; Seite 8, Zeile 2 - Seite 10, Zeile 33 * | | B 01 D <br> B 01 J <br> C 02 F |

Der vorliegende Recherchenbericht wurde für alle Patentansprüche erstellt.

| Recherchenort | Abschlußdatum der Recherche | Prüfer |
|---|---|---|
| DEN HAAG | 01-10-1984 | SIEM T.D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82